# EUROPÄISCHE PATENTSCHRIFT

(11) **EP 1 193 926 B1**
(45) Veröffentlichungstag und Bekanntmachung des Hinweises auf die Patenterteilung: **15.02.2006**
(21) Anmeldenummer: 01122107.4
(22) Anmeldetag: 14.09.2001
(51) Int. Cl.: H04L 12/40, H04L 12/417, H04L 12/43, H04L 12/52, H04L 12/44

(54) **Verfahren und System zur Echtzeitkommunikation in einem Netz mit Ethernet-Physik**
Method and system for real-time communication in a network with Ethernet physical layer
Procédé et système pour la communication en temp réel dans un réseau à couche physique Ethernet

(30) Priorität: 27.09.2000 DE 10047925
(43) Veröffentlichungstag der Anmeldung: 03.04.2002
(73) Patentinhaber: SIEMENS AKTIENGESELLSCHAFT, 80333 München (DE)
(72) Erfinder: Gross, Markus, 90762 Fürth (DE); Hahn, Ulrich, 90766 Fürth (DE); Jänicke, Peter, 91058 Erlangen (DE); Käsdorf, Oswald, 91091 Grossenseebach (DE); Teckentrup, Martin, 90513 Zirndorf (DE)

(56) Entgegenhaltungen:
- US-A- 5 734 329
- US-A- 5 974 056
- CENA G ET AL: "Standard field bus networks for industrial applications" COMPUTER STANDARDS AND INTERFACES, ELSEVIER SEQUOIA. LAUSANNE, CH, Bd. 17, Nr. 2, 15. Januar 1995 (1995-01-15), Seiten 155-167, XP004046736 ISSN: 0920-5489
- SASTRY R ET AL: "A low cost optical slotted ring network for RS-232C based communications" PROC. IEEE, 22. November 1989 (1989-11-22), Seiten 646-649, XP010087882
- KING T J: "The fibre distributed data interface (FDDI)-a new generation standard for local area networks" PROC. IEEE, 13. Juni 1988 (1988-06-13), Seiten 239-242, XP010077389

## Beschreibung

Die Erfindung betrifft ein Verfahren zur Echtzeitkommunikation zwischen mehreren Netzwerkteilnehmern in einem Kommunikationssystem, wobei als physikalische Datenübertragung die Leitungstreiberbausteine des FAST-ETHERNET genutzt werden.

Mit der zunehmenden Vernetzung verschiedenster technischer Systeme wächst die Forderung nach standardisierten Strukturen in der Industrie. In diesem Zusammenhang besteht auch der Wunsch, beliebige Geräte dezentral koppeln zu können.

Um diesem Bedürfnis nach offenen Systemen zur Vernetzung entsprechen zu können, besteht die Notwendigkeit, einfache und kostengünstige Kommunikationsmechanismen zur Verfügung zu stellen, um industrielle Geräte netzwerkfähig zu machen. Diese Forderung besteht vor allem auch im Zusammenhang mit der Kopplung von Antriebskomponenten wie zwischen Antriebsregelungen, Leistungsteilen und Gebern, z.B. bei numerisch gesteuerten Werkzeugmaschinen und Robotern, bei denen eine Mehrzahl interpolierender Achsen synchron betrieben werden müssen.

Herkömmlicherweise sind bei heutigen hochleistungsfähigen Antriebssystemen die Schnittstellen zu Geber und Leistungsteilen als analoge Signalschnittstellen ausgeführt, was aber eine deutliche Einschränkungen bzgl. der räumlichen Verteilbarkeit bedeutet, da die durch EMV-Einwirkungen (EMV steht für elektromagnetische Verträglichkeit) bedingte Störanfälligkeit mit der Leitungslänge zunimmt. Bei geringeren Leistungsanforderungen werden zumeist firmenproprietäre serielle digitale Übertragungssysteme genutzt. Die Kommunikation zwischen der Antriebsregelung und der Bewegungssteuerung wird bei hohen Leistungsanforderungen durch firmenproprietäre serielle Datenübertragungssysteme realisiert.

In der Veröffentlichung "Standard field bus networks for industrial applications" von Gianluca Cena, Luca Durante und Adriano Valenzano, abgedruckt in "Computer Standars & Interfaces", Band 17 (1995), Seiten 155 bis 167, werden drei verschiedene Feldbus-Standards für Industrieanwendungen einander gegenüber gestellt. Bei diesen Standards handelt es sich um den französischen Standard FIP, den deutschen Standard PROFIBUS und SERCOS. Der Standard SERCOS ist für die Kommunikation in eng umgrenzten Bereich numerisch gesteuerter Maschinen erstellt worden. Beim Standard SERCOS wird auf einem Ring aus Lichtwellenleiter deterministisch und dezentral durch Zeitschlitze zugegriffen. Während einer Initialisierungs-Phase wird jedem Slave am Lichtwellenleiter-Ring vom Master ein optimaler Sendezeitpunkt zugeordnet. Als Bezugspunkt für alle Zeiten dient das Ende eines sehr kurzen Master-Synch.-Telegramms. Wenn ein Master kein eigenes Telegramm in den Ring einspeist, sendet dieser ein Füllsignal, mit dessen Hilfe alle Slaves stets bitsynchron bleiben. Zu jedem festen Zeitpunkt legt jeder Slave sein Antriebstelegramm auf den Ring. Die am Ring folgenden Slaves reichen diese Telegramme zum Master weiter. Nachdem alle Antriebstelegramme beim Master vorliegen, sendet dieser ein längeres Master-Daten-Telegramm, das alle zyklisch übertragenen Daten für alle Slaves enthält. Als Globaltelegramm werden diese Daten praktisch gleichzeitig von den Slaves empfangen. Ebenfalls per Initialisierung kennt jeder Slave die Zeitpunkte, zu dem einerseits systemweit alle Messwerte gleichzeitig abgetastet und andererseits systemweit alle Sollwerte gleichzeitig freigegeben werden. Exakt nach Ablauf der Zykluszeit startet der Master den nächsten Zyklus mit dem Master-Synchr.-Telegramm.

Gemäß diesem Standard SERCOS wird jedem Slave jeweils nur ein Zeitpunkt für den Sendebetrieb nicht jedoch für den Empfangsbetrieb zugeordnet. Außerdem benötigt dieser Standard SERCOS eine Ringstruktur, wobei für ein bitsynchrones Arbeiten der Slaves ein Master-Synchr.-Telegramm bzw. ein Füllsignal benötigt wird. Auf Grund dieser Kommunikation ist der Standard SERCOS nicht an eine ETHERNET-Physik anpassbar.

In letzter Zeit gewinnt bei der Anforderung, industrielle Geräte netzwerkfähig zu machen, vor allem die aus der Bürotechnik bekannte Datenübertragungstechnik des ETHERNET (Datenübertragungsrate 10 Mbit/s), insbesondere des FAST ETHERNET (Datenübertragungsrate 100Mbit/s - Norm IEEE Std 802.3-1998) an Bedeutung. Dies liegt zum einen daran, dass diese Entwicklung einen offenen Standard im Hinblick auf Kompatibilität darstellt und darüber hinaus kostengünstig verfügbar ist, weil entsprechende Schnittstellenhardware aufgrund der hohen Verbreitung im Bereich der Personal Computer in hohen Stückzahlen produziert wird. Hinzu kommt, dass ETHERNET-Netzwerke in vielen Unternehmen bereits weit verbreitet sind, so dass bereits auf einer gut ausgebauten Infrastruktur aufgesetzt werden kann. Dies alles spricht für den Einsatz des ETHERNET auch im Bereich der Automatisationstechnik.

ETHERNET wird in der Regel im Bereich der Local Area Networks LAN eingesetzt, wobei das meistgenutzte Übertragungsprotokoll TCP/IP (Transmission Control Protocol/Internet Protocol) ist.

Nach dem bereits zitierten Standard IEEE 802.3 wird dabei zumeist als Zugriffsverfahren CSMA/CD (Carrier Sense Multiple Access/Collision Detect) eingesetzt. Bei diesem Verfahren sind alle Netzwerkteilnehmer gleichberechtigt und jedem Netzwerkteilnehmer ist es erlaubt, zu jedem Zeitpunkt eine Meldung auf dem Netzwerk, in der Regel einem Bussystem, abzusetzen. Dabei taucht jedoch das Problem auf, dass zwei oder mehr Teilnehmer zur gleichen Zeit eine Nachricht senden. In diesem Fall wird eine Kollision erkannt und jedem beteiligten Teilnehmer wird daraufhin eine per Zufall bestimmte Wartezeit zugeteilt, bevor ein erneuter Sendeversuch unternommen wird.

Man spricht daher auch von einem statistischen Zugriffsverfahren.

Die Anforderungen an die Leistungsfähigkeit von Kommunikationssystemen ist in der Automatisierungstechnik, z.B. bei der Kopplung von Antriebskomponenten, besonders groß. Beim Datenaustausch zwischen Gebern, Leistungsteilen und einer Antriebsregelung ist die Datenübertragungszeit, die als Totzeit in die Regelschleife eingeht, eine besonders wichtige Größe. Je kleiner diese Totzeit ist, desto höhere Dynamik kann mit dem Regelungssystem erreicht werden.

Auch die Verbindung zwischen Bewegungssteuerungen und Antriebsregelungen ist empfindlich für Totzeiten, da auch über diese Verbindung eine Regelschleife geschlossen wird. Ein Problem besteht somit vor allem in der Datenübertragungszeit bei seriellen Kommunikationssystemen, das nur durch ein entsprechend schnelles und echtzeitfähiges, d.h. deterministisches System gelöst werden kann.

Damit steht einer Anwendung in der Automatisierungstechnik jedoch entgegen, dass eine Kommunikation in ETHERNET Netzwerken kein determiniertes Zeitverhalten gewährleistet. Damit bietet der ETHERNET-Standard nicht die technischen Voraussetzungen für eine Echtzeitkommunikation.

Der Standard IEEE 802.3 definiert einen Telegrammrahmen, der für diesen Zweck ungeeignet ist. Da die Bauteile für die physikalische ETHERNET-Signalübertragung jedoch unabhängig von der Standard-Protokollform sind, bleibt dem Entwickler ein Spielraum, in welcher Protokollform die Daten zu übertragen sind. Es wird nur Layer-1 (die physikalische Ebene) von Standard IEEE 802.3 übernommen.

Aufgabe der vorliegenden Erfindung ist es daher, ein Transportprotokoll zu schaffen, welches eine Echtzeitkommunikation unter Einbeziehung der verbreiteten Ethernet-Physik ermöglicht.

Gemäß der vorliegenden Erfindung wird diese Aufgabe durch ein Verfahren zur Echtzeitkommunikation zwischen mehreren Netzwerkteilnehmern in einem Kommunikationssystem, wobei als physikalische Datenübertragung die Leitungstreiberbausteine des FAST-ETHERNET genutzt werden, gelöst, bei dem:
- eine Mastereinheit und ein oder mehrere Slaveeinheiten mittels über das Netzwerk übertragenen Telegrammen miteinander kommunizieren,
- ein zyklischer Austausch der Telegramme mit äquidistanten Abtastzeitpunkten stattfindet, indem jede Slaveeinheit auf die Mastereinheit durch eine gemeinsame Zeitbasis synchronisiert wird und
- eine Zugriffssteuerung für den Sendebetrieb und Empfangsbetrieb zwischen den Netzwerkteilnehmern über ein Zeitschlitz-Zugriffsverfahren erfolgt.

Da es bei den genannten Anwendungen sowohl auf eine hochgenaue Einhaltung der Echtzeitbedingung als auch auf eine hohe Sicherheit der Übertragung ankommt, wird die genormte Übertragungsschicht 2 (Telegrammrahmen und Zugriffsverfahren) des (Fast)-Ethernet, die diese Anforderungen nicht erfüllt, durch einen neuen Telegrammrahmen und eine neue Zugriffsteuerung vollständig neu definiert und damit die Ethernet-Physik als Basis für eine Echtzeitkommunikation zwischen beispielsweise Antriebskomponenten genutzt. Dabei kann sowohl die Kommunikation zwischen der Regelungseinheit und den Gebern und Leistungsteilen als auch die Verbindung zur einer Bewegungssteuerung realisiert werden.

Bezüglich einer Synchronisation zwischen Master und Slaveeinheiten erweist es sich als vorteilhaft, wenn eine Synchronisierung der Slaveeinheiten auf die Mastereinheit erfolgt, indem jede Slaveeinheit über einen jeweiligen Zeitzähler mit einer vorgegebenen Gesamtzykluszeit getaktet wird, der zyklisch durch den Empfang einer jeweiligen von der Mastereinheit bestimmten Slave-spezifischen Synchronisationsinformation gesetzt wird.

Es kommt somit eine Master-Slave-Kommunikationsarchitektur zum Einsatz. Um einen zyklischen Datenaustausch mit gleichen Abtastzeitpunkten realisieren zu können, wird eine gemeinsame Zeitbasis für den Master und alle Slaves hergestellt. Die Synchronisierung der Slaves auf den Master erfolgt durch speziell ausgezeichnete, zeitlich definierten Telegramme des Masters an die Slaves und individuell parametrierte Zeitzähler in den Slaves.

Dabei können Nutzdatentelegramme und spezielle Synchronisationstelegramme, die die jeweiligen Synchronisationsinformationen beinhalten, übertragen werden. Alternativ kann die Synchronisationsinformation auch in ein ausgezeichnetes Nutzdatentelegramm integriert sein.

Dabei lässt sich die Stabilität des Kommunikationssystems weiter steigern, wenn jeder Zeitzähler einer Slaveeinheit auch bei Ausbleiben der jeweiligen Synchronisationsinformation nach Ablauf der vorgegebenen Gesamtzykluszeit selbsttätig einen neuen Zyklus startet.

Für den Sende- und Empfangsbetrieb bei der zyklischen Datenübertragung kommt ein Zeitschlitz-Zugriffsverfahren zum Einsatz, das vom Master im Netzwerk initialisiert wird und eine totzeit-optimale Datenübertragung erlaubt. Dadurch können die Telegramme bzgl. gestörter, verfrühter oder verspäteter Übertragung präzise überwacht werden.

Dazu besitzt zur Initialisierung ausschließlich die Mastereinheit Sendeberechtigung auf dem Netzwerk und teilt jeder Slaveeinheit, die ausschließlich Antwortberechtigung besitzt, über ein entsprechendes Slave-spezifisches Telegramm neben der Gesamtzykluszeit mit, in welchen Zeitschlitzen innerhalb der Gesamtzykluszeit die jeweilige Slaveeinheit welche Telegramme von der Mastereinheit empfangen wird und zu welchen Zeitpunkten sie ihre Telegramme senden soll.

Dabei hat es sich als vorteilhaft erwiesen, wenn jeder Slaveeinheit in der Initialisierungsphase der jeweilige Synchronisationszeitpunkt mitgeteilt wird.

Wenn in jeder Slaveeinheit zu einem gemeinsamen Zeitpunkt, insbesondere zu einem Zyklusbeginn, jeweilige Augenblickswerte gespeichert werden, lässt sich eine gleichzeitige und äquidistante Abtastung für eine Regelung erreichen.

Nach einer weiteren vorteilhaften Ausgestaltung des Verfahrens nach der vorliegenden Erfindung sind in jedem von der Mastereinheit an eine Slaveeinheit übermittelten Telegramm Kontrollinformationen vorgesehen, mit denen sich über einen zweiten Auslösekanal direkt in der Slaveeinheit vorgesehene sicherheitsgerichtete Funktionen aktivieren lassen.

Die Nutzdaten können in einem Telegrammrahmen transportiert werden, der neben der Slave-Adressierung und Telegrammlängeninformation die Absicherung der Datenintegrität mittels beispielsweise einer CRC-Checksumme und weitere sicherheitsrelevante Datenbereiche zur Verfügung stellt. Die Daten im Telegrammrahmen können nicht nur von einem Applikationsprozessor, sondern auch von einem Kommunikationsbaustein ausgewertet werden, was einen zweiten Auslösekanal ermöglicht.

Dazu sendet jede Slaveeinheit mit jedem Telegramm ein Lebenszeichen-Signal an die Mastereinheit aus. Falls dieses Signal ausbleibt, was einen Absturz des Slave-Systems anzeigt, setzt die Mastereinheit diese Slaveeinheit mittels des zweiten Auslösekanals (ohne Mithilfe der Slaveeinheit) kontrolliert still.

Weiterhin kann die Mastereinheit in seinem Telegramm an die Slaveeinheit im Nutzdatenbereich eine Funktion in der Slaveeinheit auslösen und dieses gleichzeitig durch ein Signal in dem zweiten Auslösekanal auslösen. Somit wird eine zweikanalige Auslösung erreicht, die bei bestimmten sicherheitsgerichteten Anwendungen zwingend gefordert ist.

Zusätzlich kann die Mastereinheit in jedem seiner Telegramme an die Slaveeinheiten auch ein Master-Lebenszeichen-Signal senden. Falls dieses ausbleibt, reagieren alle Slaves mit einem kontrollierten Stillsetzen der eigenen Funktionen.

Obwohl die zur Anwendung kommende Übertragungstechnik nach dem Ethernet-Standard prinzipiell nur Punkt-zu-Punkt-Verbindungen erlaubt, kann wie bei (FAST) ETHERNET Netzen auch durch die Verwendung von Netzknoten (sogenannte HUBs) die Bildung von Netzwerken ermöglicht werden, indem mehrere oder jeder Netzwerkteilnehmer über einen Schaltungsteil zur Bildung von Netzknoten verfügt, der zur Weiterleitung der Telegramme in Richtung einer anderen Mastereinheit oder weiterer Slaveeinheiten dient, wobei eine Kommunikation zwischen Netzwerkteilnehmern über Netzknoten ebenfalls nach der vorangehend beschriebenen Vorgehensweise erfolgt.

Weiterhin können die getrennten Sende- und Empfangsleitungen zwischen zwei Netzwerkteilnehmern gleichzeitig benutzt werden. Dies geschieht etwa nach der Regel, dass alle Slaveeinheiten nur in Richtung zur Mastereinheit senden und nur Telegramme aus Richtung Master von der Mastereinheit empfangen. Damit wird erreicht, dass ein Telegramm ,Master in Richtung Slave' und ein Telegramm ,Slave in Richtung Master' gleichzeitig übertragen werden können. Dadurch wird ein Vollduplex-Betrieb ermöglicht.

Mit Hilfe der im vorangehenden beschriebenen Vorgehensweise lässt sich auf Basis eines Kommunikationssystems, bei dem als physikalische Datenübertragung die Leitungstreiberbausteine des FAST-ETHERNET genutzt werden, eine Echtzeitkommunikation erreichen. Dabei können auch hierarchische Netzwerke mit über Netzknoten verbundenen Punkt-zu-Punkt-Verbindungen zur Durchführung einer Echtzeitkommunikation in größeren Netztopologien erstellt werden, wobei als physikalische Datenübertragung die Leitungstreiberbausteine des FAST-ETHERNET genutzt werden.

Dieses eignet sich auch zur Vernetzung bzw. Kopplung eines verteilten Antriebssystems, indem ein erstes Kommunikationssystem eine numerische Bewegungssteuerung als Mastereinheit und mindestens eine Regelungseinheit als Slaveeinheit umfasst, wobei jede Regelungseinheit als Mastereinheit eines weiteren Kommunikationssystems dient, welches mindestens ein Leistungsteil zur Ansteuerung eines Motors und ein zugeordnetes Gebersystem als Slaveeinheiten aufweist.

Indem die Kommunikation zwischen den Antriebskomponenten wie Regelungseinheit, Geber, Leistungsteilen und Bewegungssteuerungen durch ein vorhandenes Hochleistungs-Übertragungssystem aus der Bürokommunikation mittels vollständig neuem Protokoll, Master-Slave-Synchronisation und Zeitschlitz-Zugriffsverfahren zur Echtzeitfähigkeit ertüchtigt wird, lassen sich auch sicherheitsgerichtete Applikationen realisieren.

Die Nutzung der Leitungstreiberbausteine der (FAST)-ETHERNET-Übertragungstechnik als physikalische Datenübertragung unter Einbeziehung des Verfahrens nach der vorliegenden Erfindung bringt somit unter anderem folgende Vorteile:
- günstige Leitungstreiber, da diese in der Bürokommunikationstechnik mit ihren hohen Stückzahlen genutzt - eine ausgereifte Technik, die auch in der Industrie zum Einsatz kommt;
- die Leitungstreiber erlauben ein beliebiges Protokoll und Vollduplexbetrieb;
- es kann günstigeres Kabelmaterial im Vergleich zu den vieladrigen Analogsignalkabeln genutzt werden;
- größere Entfernungen sind zwischen den Komponenten möglich als bei den Analogsignalkabeln;
- es lassen sich geringere Totzeiten durch hohe Ubertragungsleistungen von bis zu 100 MBit/s bei FAST-ETHERNET erreichen;
- es können auch komplexe Netzwerke damit aufgebaut werden.

Weitere Vorteile und Details der vorliegenden Erfindung ergeben sich anhand der folgenden Beschreibung eines vorteilhaften Ausführungsbeispiels und in Verbindung mit den Figuren.

Es zeigen:
- FIG 1: Prinzipdarstellung einer Bewegungssteuerung und eines Antriebsgerätes mit zwei Achsen auf Basis des Kommunikationssystems der Erfindung,
- FIG 2: Zeitdiagramm der Zeitzähler-Synchronisation in einem Slave,
- FIG 3: Darstellung des Zeitschlitz-Zugriffsverfahrens,
- FIG 4: Abbildung eines möglichen Telegrammrahmens,
- FIG 5: Abbildung eines möglichen Funktionscodes innerhalb eines Telegrammrahmens und
- FIG 6: Prinzipdarstellung für einen zweiten Auslösekanal für sicherheitsgerichtete Applikationen.

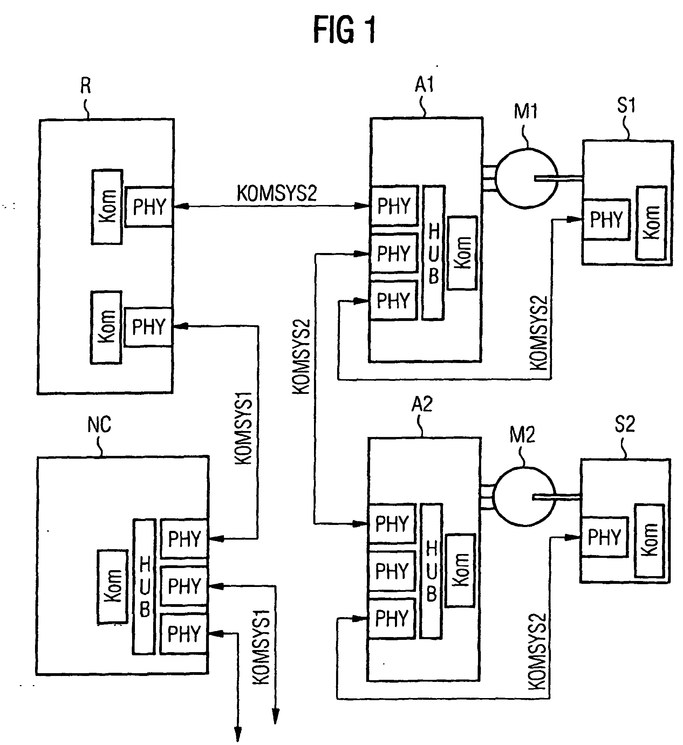

Die Darstellung nach FIG 1 zeigt ein Beispiel einer Bewegungssteuerung NC und eines Antriebsgeräts mit 2 Achsen, die durch ein erstes Kommunikationssystem KOMSYS1 auf Basis der Ethernet-Physik gekoppelt sind. Die Antriebsregelung R ist mit ihren Leistungsteilen A1, A2 und Gebern S1, S2 durch ein eigenes unabhängiges Kommunikationssystem KOMSYS2 verbunden. Das jeweilige Leistungsteil A1 und A2 dient der Ansteuerung des jeweiligen Motors M1, M2, an die wiederum jeweiligen Sensoren S1, S2 in Form von Gebersystemen angeschlossen sind, um die zu einer Lageregelung erforderlichen Strom-, Drehzahl- und Lageinformationen zu erfassen.

Hinsichtlich des ersten Kommunikationssystems KOMSYS1 stellt die Bewegungssteuerung NC die Mastereinheit dar, die mit einer Mehrzahl von Regelungen R (in FIG 1 ist der besseren Übersichtlichkeit halber nur eine Regelungsgruppe gezeigt) als Slaveeinheiten kommuniziert.

In dem zweiten Kommunikationssystem KOMSYS2 bildet die Regelung R die Mastereinheit, während die Aktoren A1, A2 und Sensoren S1, S2 die Slaveeinheiten darstellen.

Eine Verbindung zwischen den Netzwerkteilnehmern erfolgt über Fast Ethernet-Leitungstreiber PHY innerhalb jedes Netzwerkteilnehmers. Als physikalische Datenübertragung werden beispielsweise die Leitungstreiberbausteine PHY des Fast-Ethernet auf Basis eines mindestens 4-adrigen Kupferkabels oder eines 2-Leiter-Lichtwellenleiters genutzt.

Zur Vernetzung verschiedener Kommunikationssysteme weisen alle oder ein Teil der Netzwerkteilnehmer - im vorliegenden Fall sind dies die Bewegungssteuerung NC und die Aktoren A1, A2 - Schaltungsteile HUB auf, die den Leitungstreiberbausteinen PHY nachgeschaltet sind und die der Weiterleitung der Telegramme in Richtung Master oder weiteren Slaves dienen. Dadurch wird die Bildung eines hierarchischen Netzwerkes, wie in FIG 1 gezeigt, möglich.

Über die Leitungstreiber PHY und eventuelle Netzknoten HUB gelangen die Telegramme zu jeweiligen Protokollbausteinen Kom, die das Telegrammprotokoll abarbeiten und in denen das im folgenden zu erläuternde erfindungsgemäße Zeitschlitz-Zugriffsverfahren realisiert wird.

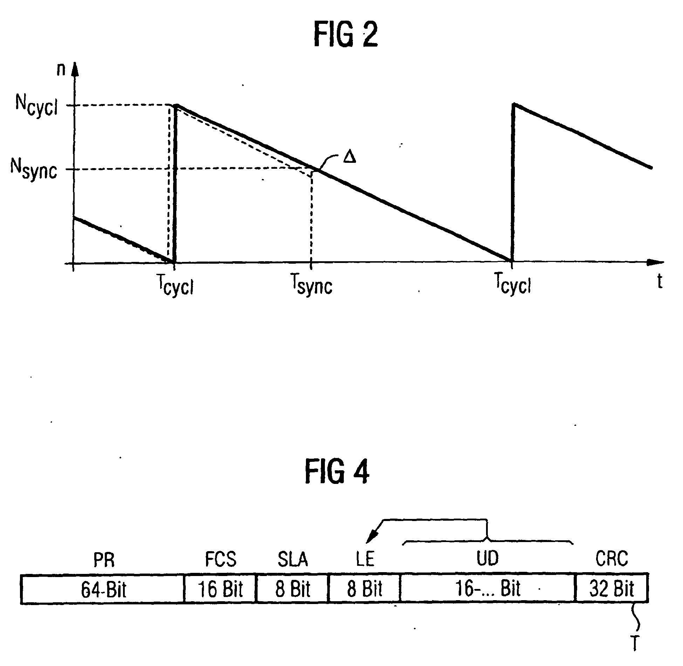

Dazu soll zunächst das Prinzip der Synchronisation zwischen einem Master und einem Slave beschrieben werden, welches in der Darstellung nach FIG 2 in Form eines Zeitdiagramms mit Zählerwerten n über die Zeit t gezeigt ist. In jedem Slave gibt es einen Zeitzähler, der durch den Empfang eines speziell ausgezeichneten Slave-spezifischen Telegrammes (z.B ein Synchronisations-Telegramm, das auch Nutzdaten transportieren kann) vom Master zum Synchronisationszeitpunkt Tsync auf einen bestimmten Wert Nsync gesetzt wird. Dieser Wert wird vorher vom Master berechnet und zusammen mit der Gesamtzykluszeit Tcycl dem Slave in einer Initialisierungsphase mitgeteilt.

Ein möglicher kurzzeitiger Ausfall dieses Slave-spezifischen Synchronisations-Telegrammes kann mit dieser Methode überbrückt werden, da der Zähler nach Ablauf der Gesamtzykluszeit Tcycl einen neuen Zyklus startet auch ohne zwischenzeitlich durch das Synchronisations-Telegramm korrigiert worden zu sein.

Dies ist in FIG 2 erkennbar, wo über die Zeit t der Verlauf eines Taktsignals n mit der Gesamtzykluszeit Tcycl aufgetragen ist. Fällt nun das Synchronisationssignal für den Slave über mehrere Zyklen aus, so läuft der Zeitzähler selbständig weiter. Dabei kann es beispielsweise aufgrund einer Quarzdrift in dem Zähler zu Abweichungen zwischen dem Gesamtzyklustakt Tcycl und dem Zeitzähler-internen Takt kommen. Ein solcher abweichender Takt ist in Form einer punktierten Linie skizziert. Eine zum Synchronisationszeitpunkt Tsync vorhandene Abweichung Δ kann dann korrigiert werden, wenn wieder ein Synchronisationssignal zur Verfügung steht, das den Zeitzähler neu setzt.

Die Quarzdrift zwischen einem Master und Slave (z.B. +/-100ppm, Quarzeigenschaft) bestimmt zusammen mit der Zykluszeit Tcycl des zyklischen Datenverkehrs die Genauigkeitsgrenzen der Zeitschlitze für die Zugriffssteuerung. Dabei gilt:
Zykluszeit * Quarzdrift > max. Genauigkeit des Zeitschlitzes (Beispiel: 1 ms * +/-200ppm = +/-0,2µs > max. Genauigkeit des Zeitschlitzes).

Jedes Kommunikationsnetzwerk KOMSYS1, KOMSYS2 von Netzwerkteilnehmern besteht aus genau einer Mastereinheit und einem oder mehreren Slaveeinheiten und wird erfindungsgemäß für den zyklischen Datenaustausch mit einem Zeitschlitz-Zugriffsverfahren betrieben, um eine totzeitoptimale Datenübertragung zu erreichen.

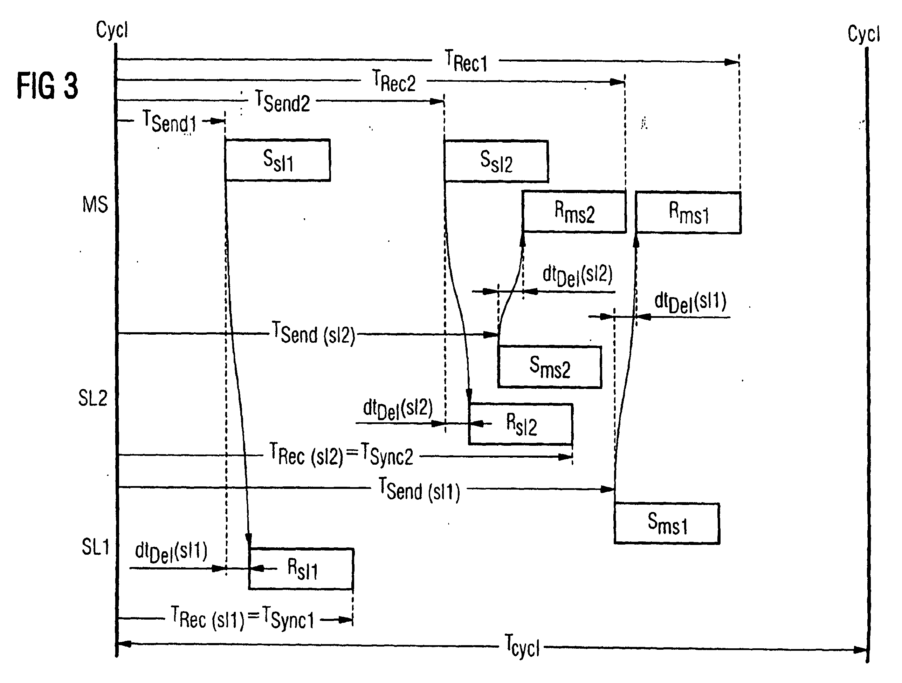

In einer Initialisierungsphase, in der nur der Master senden darf und die Slaves nur antworten dürfen, erhält jeder Slave die Information, in welchen Zeitpunkten er welche Telegramme vom Master empfangen wird und in welchen Zeitpunkten er sein Telegramm bzw. seine Telegramme zu senden hat. Die genaue Festlegung der Zeitpunkte, an denen die Telegramme gesendet oder empfangen werden müssen, erlaubt die Kontrolle der Kommunikation sowohl auf der Seite des Masters als auch auf der Seite der Slaves. Der Ablauf eines solchen Zeitschlitz-Zugriffsverfahrens nach der Erfindung ist in der Darstellung nach FIG 3 gezeigt.

Dabei ist der Zugriff einer Mastereinheit MS auf zwei exemplarische Slaveeinheiten SL1 und SL2 innerhalb eines Gesamtzyklusses Cycl bzw. Tcycl dargestellt. Der Master MS sendet nach Ablauf einer ersten Zeit Tsend1 nach dem Zyklusstart ein Sendetelegramm Ssl1 an den Slave SL1. Aufgrund von Laufzeiten auf der Kommunikationsstrecke trifft dieses Telegramm als Empfangstelegramm Rsl1 mit einer gewissen zeitlichen Verzögerung dtdel(sl1) bei der Slaveeinheit SL1 ein.

Der Abstand vom Empfangstelegrammende und dem Startpunkt des laufenden Gesamtzyklus Cycl stellt den Empfangszeitpunkt Trec(sl1) für den Slave SL1 dar, der dem spezifischen Synchronisationssignal Tsync1 für den Slave SL1 entspricht. Zu diesem Zeitpunkt erhält der Slave SL1 immer sein Synchronisationssignal und seine Daten. Dieser Zeitpunkt stellt den Taktzeitpunkt für die Slaveeinheit SL1 dar und es wird deren Zeitzähler mit einem der Zeit Tsync1 entsprechenden Wert gesetzt. Damit wird dem Slave SL1 der diesem zugeordnete Zeitschlitz zum Empfangen von Telegrammen zugewiesen. Der Zeitzähler wird beispielsweise dekrementiert, wobei der gesetzte Wert so bemessen ist, dass mit dem Ende des Gesamtzyklus der Nulldurchgang des Zählers erfolgt.

In diesem Fall sendet der Slave SL1 nun sein Antworttelegramm Sms1 an den Master, und zwar exakt nach einer vom Startzeitpunkt des aktuellen Gesamtzyklus bemessenen Sendezeit Tsend(sl1) für den Slave SL1. Diese Sendezeit Tsend(sl1) ist dem Slave SL1 fest zugeordnet und stellt seinen Zeitschlitz zum Senden von Telegrammen dar.

Dieses Telegramm trifft wiederum mit der durch die Laufzeit der Kommunikationsstrecke bedingten Verspätung dtDEL(sl1) als Empfangstelegramm Rms1 bei der Mastereinheit MS ein. Die Zeitspanne vom Startzeitpunkt des aktuellen Gesamtzyklus Cycl und dem Ende des Empfangstelegramms Rms1 stellt die Empfangszeit Trec1 für die Antwort von Slave SL1 aus Sicht des Masters MS dar.

Die Kommunikation zwischen dem Master MS und der zweiten Slaveeinheit SL2 erfolgt nach der gleichen prinzipiellen Vorgehensweise. Der Master MS sendet nach Ablauf einer weiteren Zeit Tsend2 nach dem Zyklusstart ein weiteres Sendetelegramm Ssl2 an den Slave SL2. Aufgrund von Laufzeiten auf dem Netzwerk trifft dieses Telegramm als Empfangstelegramm Rsl2 wiederum mit einer gewissen zeitlichen Verzögerung dtDel(sl2) bei der Slaveeinheit SL2 ein.

Der Abstand vom Empfangstelegrammende und dem Startpunkt des laufenden Gesamtzyklus Cycl stellt den:Empfangszeitpunkt Trec(sl2) für den Slave SL2 dar. Dieser entspricht dem spezifischen Synchronisationssignal Tsync2 für den Slave SL2. Zu diesem Zeitpunkt erhält der Slave SL2 immer sein Synchronisationssignal und seine Daten. Dieser Zeitpunkt stellt somit entsprechend den Taktzeitpunkt für die Slaveeinheit SL2 dar und es wird deren Zeitzähler mit einem der Zeit Tsync2 entsprechenden Wert gesetzt.

Damit wird dem Slave SL2 der diesem zugeordnete Zeitschlitz zum Empfangen von Telegrammen zugewiesen. Der Zeitzähler wird beispielsweise ebenfalls dekrementiert, wobei der gesetzte Wert so bemessen ist, dass mit dem Ende des Gesamtzyklus der Nulldurchgang des Zählers erfolgt.

In diesem Fall sendet der Slave SL2 sein Antworttelegramm Sms2 an den Master MS, und zwar exakt nach einer vom Startzeitpunkt des aktuellen Gesamtzyklus bemessenen Sendezeit Tsend(sl2) für den Slave SL2. Diese Sendezeit Tsend(sl2) ist dem Slave SL2 fest zugeordnet und stellt den Zeitschlitz zum Senden von Telegrammen dar. Die Slaveeinheit SL2 kann nur deshalb bereits vor dem vollständigen Empfang des Telegramms Rsl2 mit dem Senden eines Telegramms Sms2 an den Master MS beginnen, weil der entsprechende Zeitschlitz zum Senden nach Tsend2 bereits aus einer vorigen Periode des Gesamtzyklus Cycl bekannt ist, die Slaveeinheit SL2 sich also bereits im eingeschwungenen Synchronisationszustand befindet.

Dieses Telegramm trifft wiederum mit der durch die Laufzeit der Kommunikationsstrecke bedingten Verspätung dtDEL(sl2) als Empfangstelegramm Rms2 bei der Mastereinheit MS ein. Die Zeitspanne vom Startzeitpunkt des aktuellen Gesamtzyklus Cycl und dem Ende des Empfangstelegramms Rms2 stellt die Empfangszeit Trec2 für die Antwort von Slave SL2 aus Sicht des Masters MS dar.

Für weitere Slaveeinheiten ist die Vorgehensweise entsprechend, wobei jeder Slaveeinheit ein eigener exklusiver Zeitschlitz zugeordnet ist.

Damit ist nicht nur eine Störung, sondern auch eine verspätete oder verfrühte Sendung eines Telegrammes sofort erkennbar. Ein bestimmtes Telegramm an einen Slave dient neben der Datenübertragung auch der Synchronisation.

Durch die Synchronisation wird neben der Zeitschlitzsteuerung erreicht, dass zu einem bestimmten gemeinsamen Zeitpunkt, hier der Zyklusbeginn Cycl, die Istwerte in allen Slaves gespeichert werden können, um eine gleichzeitige, äquidistante Abtastung für die Regelung R zu erreichen. Dazu wird von jeder Slaveeinheit, insbesondere von den Sensoren bzw. Gebersystemen S1 und S2, mit Erreichen des Nulldurchgangs des entsprechenden Zeitzählers der aktuelle Istwert gespeichert und anschließend an die übergeordnete Mastereinheit NC oder R übertragen. Im Falle des in FIG 1 gezeigten Antriebssystems mit zwei gekoppelten Achsen liefern die Slaveeinheiten S1, S2 entsprechende Drehzahl- und Lage-Istwerte.

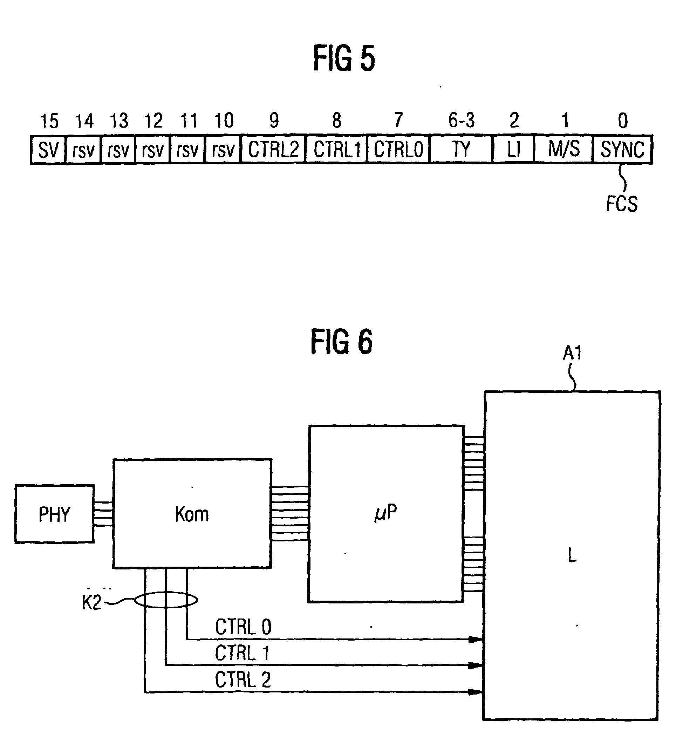

Die Darstellung nach FIG 4 zeigt einen möglichen Telegrammrahmen für ein über das Netzwerk auszutauschendes Telegramm T. Das Telegramm beginnt mit einer Telegramm-Präambel PR von z.B. 64 Bit Länge. Es folgt eine Funktions-Code-Sequenz FCS von 16 Bit, die im folgenden anhand von FIG 5 erläutert wird.

Anschließend folgen 8 Bit mit der Adresse SLA der Slaveeinheit. Dabei hängt die Anzahl der erforderlichen Bits von der Zahl der zu adressierenden Slaveeinheiten ab. Bei 8 Bit beträgt die zu adressierende Anzahl von Slaves 255 (der Wert NULL ist üblicherweise für eine Broadcast-Funktion reserviert).

Darauf folgt die Länge LE der anschließenden Nutzdaten DU. Damit ist die Telegrammlänge variabel. Der Telegrammrahmen schließt mit einer Prüfsumme CRC von beispielsweise 32 Bit Länge (CRC steht für = cyclic redundancy check, ein bekanntes Verfahren zur Fehlerüberwachung).

FIG 5 zeigt nun den Ausschnitt der Funktions-Code-Sequenz FCS in einer möglichen Detailansicht. Das höchstwertigste Bit beinhaltet ein Supervisor Bit SV. Dieses stellt ein Lebenszeichen dar, dass bei Absturz beispielsweise einer Regelungs-Software im Master nicht mehr gesetzt wird. Dadurch kann im Slave z.B. der Übergang in einen sicheren Zustand ausgelöst werden.

Die Bits 14 bis 10 sind für beliebige Aufgaben reserviert. Es folgen drei Kontroll-Bits CTRL0 bis CTRL2, ein Bereich von drei bis sechs Bits für eine Hinterlegung des Telegrammtyps TY sowie ein weiteres Bit LI, welches signalisiert, ob Längeninformationen vorhanden sind oder ob eine feste, genormte Telegrammlänge anzunehmen ist. Das Bit M/S signalisiert, ob es sich um ein Telegramm handelt, welches vom Master zu einem Slave transportiert wird oder umgekehrt, zeigt also die Transportrichtung an. Das letzte Bit SYNC zeigt an, ob es sich um ein Synchronisationstelegramm oder um ein Nutztelegramm handelt. Es ist auch denkbar, das durch das SYNC-Bit signalisiert wird, dass neben Nutzdaten zusätzlichen Synchronisationdaten enthalten sind.

Die Kontroll-Bits CTRL0 bis CTRL2 dienen beispielsweise zur Realisierung spezieller Sicherheitsfunktionen, wie sie vor allem im Bereich der Industrieautomatisierung erforderlich sind. Eine mögliche Realisierung einer sicherheitsgerichteten Funktion mit Hilfe der Kontroll-Bits CTRL0 bis CTRL2 ist in der Darstellung nach FIG 6 gezeigt.

Dazu ist ein Blockschaltbild mit dem internen Aufbau einer Slaveeinheit gezeigt, etwa des Leistungsteils A1 aus der Antriebsregelung nach FIG1.

Wenn der Baustein Kom, der das Telegramm über den Leitungstreiber PHY empfängt und der das Kommunikations-Protokoll erledigt, unabhängig von einem Mikroprozessor µP der Slave-Applikation (dem eigentlichen Leistungsteil L) ist, können mittels der Kontroll-Bits CTRL0 bis CTRL2 bestimmte Applikationsereignisse im Slave A1 ausgelöst werden, ohne den Mikroprozessor µP und eine entsprechende Software des Slave A1 zu benötigen. Dies entspricht einem zweiten Auslösekanal K2, wie er für bestimmte sicherheitsgerichtete Anwendungen (z.B. Not-Aus etc.) gefordert ist.

Durch die voranstehenden erfindungsgemäßen Verfahrensschritte lässt sich auf der Grundlage der Ethernet-Physik ein Kommunikationsnetzwerk mit deterministischem Zeitverhalten und damit die Möglichkeit einer Echtzeitkommunikation vor allem auch für die Industrieautomatisierung erzielen.

## Patentansprüche

1. Verfahren zur Echtzeitkommunikation zwischen mehreren Netzwerkteilnehmern in einem Kommunikationssystem (KOMSYS1, KOMSYS2), wobei als physikalische Datenübertragung die Leitungstreiberbausteine (PHY) des FAST-ETHERNET genutzt werden,
- wobei eine Mastereinheit (NC, R, MS) und ein oder mehrere Slaveeinheiten (A1, A2, S1, S2, SL1, SL2) mittels über das Kommunikationssystem übertragenen Telegrammen (T) miteinander kommunizieren,
- wobei ein zyklischer Austausch der Telegramme (T) mit äquidistanten Abtastzeitpunkten (Tcycl) stattfindet, indem jede Slaveeinheit (A1, A2, S1, S2, SL1, SL2) auf die Mastereinheit (NC, R, MS) durch eine gemeinsame Zeitbasis (Tsync, Tsync1, Tsync2) synchronisiert wird,
- wobei eine Zugriffssteuerung für den Sendebetrieb und Empfangsbetrieb zwischen den Netzwerkteilnehmern über ein Zeitschlitz-Zugriffsverfahren (Ssl1, Rsl1, Sms1, Rms1, Ssl2, Rsl2, Sms2, Rms2) erfolgt.

2. Verfahren nach Anspruch 1, wobei eine Synchronisierung der Slaveeinlieiten (A1, A2, S1, S2, SL1, SL2) auf die Mastereinheit (NC, R, MS) erfolgt, indem jede Slaveeinheit (A1, A2, S1, S2, SL1, SL2) über einen jeweiligen Zeitzähler (n) mit einer vorgegebenen Gesamtzykluszeit (Tcycl) getaktet wird, wobei der jeweilige Zeitzähler (n) zyklisch durch den Empfang einer jeweiligen von der Mastereinheit (NC, R, MS) bestimmten Slave-spezifischen Synchronisationsinformation (Nsync, Tsync, Tsync1, Tsync2) gesetzt wird.

3. Verfahren nach Anspruch 2, wobei Nutzdatentelegramme und spezielle Synchronisationstelegramme, die die jeweiligen Synchronisationsinformationen (Tsync, Tsync1, Tsync2) beinhalten, übertragen werden.

4. Verfahren nach Anspruch 2, wobei die jeweiligen Synchronisationsinformationen (Tsync, Tsync1, Tsync2) in entsprechend **gekennzeichnet**e Nutzdatentelegramme integriert sind.

5. Verfahren nach einem der Ansprüche 2 bis 4, wobei jeder Zeitzähler (n) einer Slaveeinheit (A1, A2, S1, S2, SL1, SL2) auch bei Ausbleiben der jeweiligen Synchronisationsinformation (Tsync, Tsync1, Tsync2) nach Ablauf der vorgegebenen Gesamtzykluszeit (Tcycl) selbsttätig einen neuen Zyklus startet.

6. Verfahren nach einem der vorangehenden Ansprüche 2 bis 5, wobei zur Initialisierung ausschließlich die Mastereinheit (NC, R, MS) Sendeberechtigung auf dem Kommunikationssystem (KOMSYS1, KOMSYS2) besitzt und jeder Slaveeinheit (A1, A2, S1, S2, SL1, SL2), die ausschließlich Antwortberechtigung besitzt, über ein entsprechendes Slave-spezifisches Telegramm (Ssl1, Ssl2) neben der Gesamtzykluszeit (Tcycl) mitteilt, in welchen Zeitschlitzen (Tsyncl, Tsync2) innerhalb der Gesamtzykluszeit (Tcycl) die jeweilige Slaveeinheit (A1, A2, S1, S2, SL1, SL2) welche Telegramme (Rsl1, Rsl2) von der Mastereinheit (NC, R, MS) empfangen wird und in welchen Zeitschlitzen (Tsend(sl1), Tsend(sl2)) sie ihre Telegramme (Sms1, Sms2) senden sol1.

7. Verfahren nach Anspruch 6, wobei jeder Slaveeinheit (A1, A2, S1, S2, SL1, SL2) in der Initialisierungsphase der jeweilige Synchronisationszeitpunkt (Tsync1, Tsync2) mitgeteilt wird.

8. Verfahren nach einem der vorangehenden Ansprüche 2 bis 7, wobei in jeder Slaveeinheit (A1, A2, S1, S2, SL1, SL2) zu einem gemeinsamen Zeitpunkt, insbesondere zu einem Zyklusbeginn, jeweilige Augenblickswerte gespeichert werden.

9. Verfahren nach einem der vorangehenden Ansprüche, wobei jede Slaveeinheit (A1, A2, S1, S2, SL1, SL2) mit jedem Telegramm (T) ein Signal (SV) an die Mastereinheit (NC, R, MS) aussendet und die Mastereinheit (NC, R, MS) bei Ausbleiben dieses Signals (SV) die entsprechende Slaveeinheit (A1, A2, S1, S2, SL1, SL2) kontrolliert (CTRL0, CTRL1, CTRL2) stillsetzt.

10. Verfahren nach einem der vorangehenden Ansprüche, wobei in jedem von der Mastereinheit (NC, R, MS) an eine Slaveeinheit (A1, A2, S1, S2, SL1, SL2) übermittelten Telegramm (T) Kontrollinformationen (CTRL0, CTRL1, CTRL2) vorgesehen sind, mit denen sich über einen zweiten Auslösekanal (K2) direkt in der Slaveeinheit (A1, A2, S1, S2, SL1, SL2) vorgesehene sicherheitsgerichtete Funktionen aktivieren lassen.

11. Verfahren nach einem der vorangehenden Ansprüche, wobei die Mastereinheit (NC, R, MS) in jedem seiner Telegramme (T) an jede Slaveeinheit (A1, A2, S1, S2, SL1, SL2) auch ein Master-Lebenszeichen-Signal aussendet und jede Slaveeinheit (A1, A2, S1, S2, SL1, SL2) bei Ausbleiben dieses Signals (FS) selbsttätig mit einem kontrollierten Stillsetzen der eigenen Funktionen reagiert.

12. Verfahren nach einem der vorangehenden Ansprüche, wobei getrennte Sende- und Empfangsleitungen zwischen zwei Netzwerkteilnehmern gleichzeitig benutzt werden, indem alle Slaveeinheiten (A1, A2, S1, S2, SL1, SL2) nur in Richtung zur Mastereinheit (NC, R, MS) senden und nur Telegramme aus Richtung Master von der Mastereinheit (NC, R, MS) empfangen.

13. Verfahren zur Echtzeitkommunikation zwischen Netzwerkteilnehmern mehrerer Kommunikationssysteme (KOMSYS1, KOMSYS2), wobei jeweils als physikalische Datenübertragung die Leitungstreiberbausteine (PHY) des FAST-ETHERNET genutzt werden, wobei innerhalb jedes Kommunikationssystems (KOMSYS1, KOMSYS2) Netzwerkteilnehmer nach einem der vorangehenden Ansprüche miteinander kommunizieren, wobei eine Mehrzahl von Netzwerkteilnehmern über einen Schaltungsteil (HUB) zur Bildung von Netzknoten verfügt, der zur Weiterleitung der Telegramme (T) in Richtung einer anderen Mastereinheit oder weiterer Slaveeinheiten dient, wobei eine Kommunikation zwischen Netzwerkteilnehmern über Netzknoten (HUB) ebenfalls nach einem der vorangehenden Ansprüche erfolgt.

14. Kommunikationssystem zur Durchführung einer Echtzeitkommunikation nach einem der vorangehenden Ansprüche 1 bis 13, wobei als physikalische Datenübertragung die Leitungstreiberbausteine (PHY) des FAST-ETHERNET genutzt werden.

15. Hierarchisches Netzwerk mit über Netzknoten (HUB) verbundenen Punkt-zu-Punkt-Verbindungen zur Durchführung einer Echtzeitkommunikation nach Anspruch 13, wobei jeweils als physikalische Datenübertragung die Leitungstreiberbausteine (PHY) des FAST-ETHERNET genutzt werden.

16. Verteiltes Antriebssystem mit einem hierarchischen Netzwerk nach Anspruch 15, wobei ein erstes Kommunikationssystem (KOMSYS1) eine numerische Bewegungssteuerung (NC) als Mastereinheit und mindestens eine Regelungseinheit (R) als Slaveeinheit umfasst, wobei jede Regelungseinheit (R) als Mastereinheit eines weiteren Kommunikationssystems (KOMSYS2) dient, welches mindestens ein Leistungsteil (A1, A2) zur Ansteuerung eines Motors (M1, M2) und ein zugeordnetes Gebersystem (S1, S2) als Slaveeinheiten aufweist.

## Claims

1. Method for real-time communication between a number of network subscribers in a communication system (KOMSYS1, KOMSYS2), in which the line driver modules (PHY) of the FAST ETHERNET are used as physical data transmission,
- wherein a master unit (NC, R, MS) and one or more slave units (A1, A2, S1, S2, SL1, SL2) communicate with one another by means of messages (T) which are transmitted via the communication system,
- wherein the messages (T) are interchanged cyclically with equidistant sampling times (Tcycl), in that each slave unit (A1, A2, S1, S2, SL1, SL2) is synchronized to the master unit (NC, R, MS) by means of a common timebase (Tsync, Tsync1, Tsync2) and
- wherein access control for the transmission mode and reception mode is carried out between the network subscribers using a time slot access method (Ssl1, Rsl1, Sms1, Rms1, Ssl2, Rsl2, Sms2, Rms2).

2. Method according to Claim 1, wherein the slave units (A1, A2, S1, S2, SL1, SL2) are synchronized to the master unit (NC, R, MS) by each slave unit (A1, A2, S1, S2, SL1, SL2) being clocked via a respective timer (n) with a predetermined overall cycle time (Tcycl) and wherein the respective timer (n) is set cyclically by the reception of a respective slave-specific synchronization information item (Nsync, Tsync, Tsync1, Tsync2) which is determined by the master unit (NC, R, MS).

3. Method according to Claim 2, wherein user data messages and specific synchronization messages, which contain the respective synchronization information items (Tsync, Tsync1, Tsync2), are transmitted.

4. Method according to Claim 2, wherein the respective synchronization information items (Tsync, Tsync1, Tsync2) are integrated in appropriately identified user data messages.

5. Method according to one of Claims 2 to 4, wherein each timer (n) in a slave unit (A1, A2, S1, S2, SL1, SL2) automatically starts a new cycle once the predetermined overall cycle time (Tcycl) has elapsed, even in the absence of the respective synchronization information (Tsync, Tsync1, Tsync2).

6. Method according to one of the preceding Claims 2 to 5, wherein only the master unit (NC, R, MS) has transmission authorization on the communication system (KOMSYS1, KOMSYS2) for initialization, and reports to each slave unit (A1, A2, S1, S2, SL1, SL2), which has only response authorization, via an appropriate slave-specific message (Ssl1, Ssl2), in addition to the overall cycle time (Tcycl), the time slots (Tsyncl, Tsync2) within the overall cycle time (Tcycl) in which the respective slave unit (A1, A2, S1, S2, SL1, SL2) will receive which messages (Rsl1, Rsl2) from the master unit (NC, R, MS) and the time slots (Tsend(sl1), Tsend(sl2)) in which it should send its messages (Sms1, Sms2).

7. Method according to Claim 6, wherein each slave unit (A1, A2, S1, S2, SL1, SL2) is told the respective synchronization time (Tsync1, Tsync2) in the initialization phase.

8. Method according to one of the preceding Claims 2 to 7, wherein instantaneous values are in each case stored in each slave unit (A1, A2, S1, S2, SL1, SL2) at a common time, in particular at the start of a cycle.

9. Method according to one of the preceding claims, wherein, with each message (T), each slave unit (A1, A2, S1, S2, SL1, SL2) sends a signal (SV) to the master unit (NC, R, MS), and the master unit (NC, R, MS) stops the corresponding slave unit (A1, A2, S1, S2, SL1, SL2) in a controlled manner (CTRL0, CTRL1, CTRL2) in the absence of this signal (SV).

10. Method according to one of the preceding claims, wherein monitoring information (CTRL0, CTRL1, CTRL2) is provided in each message (T) which is transmitted by the master unit (NC, R, MS) to a slave unit (A1, A2, S1, S2, SL1, SL2), by means of which security or safety functions which are provided in the slave unit (A1, A2, S1, S2, SL1, SL2) can be activated directly via a second initiation channel (K2).

11. Method according to one of the preceding claims, wherein the master unit (NC, R, MS) also sends a master life signal in each of its messages (T) to each slave unit (A1, A2, S1, S2, SL1, SL2) and, in the absence of this signal (FS), each slave unit (A1, A2, S1, S2, SL1, SL2) automatically reacts by stopping its own functions in a controlled manner.

12. Method according to one of the preceding claims, wherein separate transmitting and receiving lines between two network subscribers are used simultaneously, in that all the slave units (A1, A2, S1, S2, SL1, SL2) transmit only in the direction of the master unit (NC, R, MS) and receive only messages from the master direction from the master unit (NC, R, MS).

13. Method for real-time communication between network subscribers in a number of a communication systems (KOMSYS1, KOMSYS2), in which the line driver modules (PHY) of the FAST ETHERNET are used in each case as physical data transmission, wherein, within each communication system (KOMSYS1, KOMSYS2) network subscribers communicate with one another according to one of the preceding claims, wherein a number of network subscribers have one circuit part (HUB) in order to form network nodes, which circuit part is used for passing on the messages (T) in the direction of another master unit or further slave units, wherein communication between network subscribers via network nodes (HUB) likewise takes place according to one of the preceding claims.

14. Communication system for carrying out real-time communication according to one of the preceding Claims 1 to 13, in which the line driver modules (PHY) of the FAST ETHERNET are used as physical data transmission.

15. Hierarchical network having point-to-point connections, which are connected via network nodes (HUB), for carrying out real-time communication according to Claim 13, in which the line driver modules (PHY) of the FAST ETHERNET are used in each case as physical data transmission.

16. Distributed drive system having a hierarchical network according to claim 15, wherein a first communication system (KOMSYS1) comprises a numerical movement controller (NC) as the master unit and at least one control unit (R) as the slave unit, with each control unit (R) being used as the master unit for a further communication system (KOMSYS2), which has at least one power section (A1, A2) for driving a motor (M1, M2), and an associated transmission system (S1, S2) as slave units.

## Revendications

1. Procédé pour la communication en temps réel entre plusieurs abonnés au réseau dans un système (KOMSYS1, KOMSYS2) de communication, les blocs (PHY) fonctionnels d'attaque de ligne de l'ETHERNET FAST étant utilisés en tant que transmission physique de données,
- une unité (NC, R, MS) maître et une ou plusieurs unités (A1, A2, S1, S2, SL1, SL2) esclaves communiquant ensemble au moyen de télégrammes (T) transmis par l'intermédiaire du système de communication,
- un échange cyclique des télégrammes (T) ayant lieu à des moments (Tcycl) d'échantillonnage équidistants, chaque unité (A1, A2, S1, S2, SL1, S12) esclave étant synchronisée sur l'unité (NC, R, MS) maître par une base de temps commune,
- une commande de l'accès pour le mode d'émission et pour le mode de réception entre les abonnés au réseau étant effectuée par l'intermédiaire d'un procédé (Ss11, Rs11, Sms1, Rmsl, Ss12, Rs12, Sms2, Rms2) d'accès à fenêtre de temps.

2. Procédé selon la revendication 1, une synchronisation des unités (A1, A2, S1, S2, SL1, SL2) esclaves étant effectuée sur les unités (NC, R, MS) maîtres, chaque unité (A1, A2, S1, S2, SL1, SL2) esclave étant synchronisée par l'intermédiaire d'un compteur (n) horaire respectif avec un temps (Tcycl) de cycle global spécifié, le compteur (n) horaire respectif étant initialisé cycliquement par la réception d'une information (Nsync, Tsync, Tsync1, Tsync2) de synchronisation esclave spécifique déterminée respectivement par l'unité (NC, R, MS) maître.

3. Procédé selon la revendication 2, des télégrammes de données utiles et des télégrammes de synchronisation spéciaux, qui contiennent les informations (Tsync, Tsync1, Tsync2) de synchronisation respectives, étant transmis.

4. Procédé selon la revendication 2, les informations (Tsync, Tsync1, Tsync2) de synchronisation respectives étant intégrées dans des télégrammes de données utiles **caractérisées** de façon appropriée.

5. Procédé selon l'une des revendications 2 à 4, chaque compteur (n) horaire d'une unité (A1, A2, S1, S2, SL1, SL2) esclave lançant automatiquement un nouveau cycle même au cas où l'information (Tsync, Tsync1, Tsync2) de synchronisation respective manque à l'expiration du temps (Tcycl) de cycle global spécifié.

6. Procédé selon l'une des revendications 2 à 5 précédentes, l'unité (NC, R, MS) maître possédant exclusivement une autorisation à émettre sur le système (KOMSYS1, KOMSYS2) de communication pour l'initialisation et chaque unité (A1, A2, S1, S2, SL1, SL2) esclave, qui possède exclusivement une autorisation à répondre, communiquant, par l'intermédiaire d'un télégramme (Ss11, Ss12) esclave spécifique approprié en plus du temps (Tcycl) de cycle global, dans quelles fenêtres (Tsync1, Tsync2) de temps à l'intérieur du temps (Tcycl) de cycle global l'unité (A1, A2, S1, S2, SL1, SL2) esclave respective seront reçus quels télégrammes (Rs11, Rs12) de l'unité (NC, R, MS) maître et dans quelles fenêtres (Tsend(s11), Tsend(s12)) de temps elle devra émettre ses télégrammes (Sms1, Sms2).

7. Procédé selon la revendication 6, le moment (Tsync1, Tsync2) de synchronisation respectif étant communiqué à chaque unité (A1, A2, S1, S2, SL1, SL2) esclave au cours de la phase d'initialisation.

8. Procédé selon l'une des revendications 2 à 7 précédentes, des valeurs instantanées respectives étant mémorisées dans chaque unité (A1, A2, S1, S2, SL1, SL2) esclave à un moment commun, en particulier au début d'un cycle.

9. Procédé selon l'une des revendications précédentes, chaque unité (A1, A2, S1, S2, SL1, SL2) esclave émettant un signal (SV) à l'unité (NC, R, MS) maître avec chaque télégramme et l'unité (NC, R, MS) maître arrêtant de façon contrôlée (CTRL0, CTRL1, CTRL2) l'unité (A1, A2, S1, S2, SL1, SL2) esclave correspondante au cas où ce signal (SV) manque.

10. Procédé selon l'une des revendications précédentes, des informations (CTRL0, CTRL1, CTRL2) de contrôle étant prévues dans chaque télégramme (T) transmis par l'unité (NC, R, MS) maître à une unité (A1, A2, S1, S2, SL1, SL2) esclave, informations permettant d'activer des fonctions orientées sécurité prévues directement dans l'unité (A1, A2, S1, S2, SL1, SL2) esclave par l'intermédiaire d'une deuxième voie (K2) de déclenchement.

11. Procédé selon l'une des revendications précédentes, l'unité (NC, R, MS) maître émettant aussi un signal de signe de vie de maître dans chacun de ses télégrammes (T) à chaque unité (A1, A2, S1, S2, SL1, SL2) esclave et chaque unité (A1, A2, S1, S2, SL1, SL2) esclave réagissant automatiquement par un arrêt contrôlé des fonctions propres au cas où ce signal (FS) manque.

12. Procédé selon l'une des revendications précédentes, des lignes séparées d'émission et de réception étant utilisées simultanément entre deux abonnés au réseau, toutes les unités (A1, A2, S1, S2, SL1, SL2) esclaves n'émettant qu'en direction de l'unité (NC, R, MS) maître et ne recevant que des télégrammes provenant de la direction maître de l'unité (NC, R, MS) maître.

13. Procédé pour la communication en temps réel entre des abonnés au réseau de plusieurs systèmes (KOMSYS1, KOMSYS2) de communication, les blocs (PHY) fonctionnels d'attaque de ligne de l'ETHERNET FAST étant respectivement utilisés en tant que transmission physique de données, des abonnés au réseau communiquant ensemble selon l'une des revendications précédentes à l'intérieur de chaque système (KOMSYS1, KOMSYS2) de communication, une majeure partie d'abonnés au réseau disposant d'un élément (HUB) de circuit pour la formation de noeuds de réseau, élément de circuit qui sert à la transmission des télégrammes (T) en direction d'une autre unité maître ou d'autres unités esclaves, une communication entre des abonnés au réseau étant également effectuée selon l'une des revendications précédentes par l'intermédiaire de noeuds (HUB) de réseau.

14. Système de communication pour la réalisation d'une communication en temps réel selon l'une des revendications 1 à 13 précédentes, les blocs (PHY) fonctionnels d'attaque de ligne de l'ETHERNET FAST étant utilisés en tant que transmission physique de données.

15. Réseau hiérarchique avec des liaisons point à point reliées par l'intermédiaire de noeuds (HUB) de réseau pour la réalisation d'une communication en temps réel selon la revendication 13, les blocs (PHY) fonctionnels d'attaque de ligne de l'ETHERNET FAST étant utilisés respectivement en tant que transmission physique de données.

16. Système de commande réparti ayant un réseau hiérarchique selon la revendication 15, un premier système (KOMSYS1) de communication comprenant un dispositif de commande (NC) du mouvement numérique en tant qu'unité maître et au moins une unité (R) de régulation en tant qu'unité esclave, chaque unité (R) de régulation servant en tant qu'unité maître un autre système (KOMSYS2) de communication, qui présente au moins un élément (A1, A2) de puissance pour la commande d'un moteur (M1, M2) et un système (S1, S2) de transmission associé en tant qu'unités esclaves.
